# FASCICULE DE BREVET EUROPEEN

(11) **EP 0 976 940 B1**
(45) Date de publication et mention de la délivrance du brevet: **24.05.2006**
(21) Numéro de dépôt: 99401770.5
(22) Date de dépôt: 15.07.1999
(51) Int. Cl.: F16D 7/02

(54) **Dispositif d'accouplement limitant le couple**
Eine momentbegrenzende Kupplungsanordnung
A torque limiting coupling device

(30) Priorité: 29.07.1998 FR 9809689
(43) Date de publication de la demande: 02.02.2000
(73) Titulaire: SAGEM Communication, 75015 Paris (FR)
(72) Inventeur: Leylde, Philippe, 95800 Cergy le Haut (FR); Roullier, Roger, 95000 Cergy (FR)
(74) Mandataire: Bloch, Gérard

(56) Documents cités:
- BE-A- 380 501
- DE-B- 1 289 292
- FR-A- 1 457 220
- FR-A- 2 319 810
- GB-A- 826 499
- GB-A- 1 474 653
- GB-A- 2 188 124
- US-A- 2 306 730
- US-A- 3 100 974
- US-A- 5 020 650

## Description

L'invention concerne un dispositif d'entraînement en rotation par pignons, l'un menant, ou moteur, l'autre mené, ou entraîné, voir par exemple le document GB-A 2 188 124.

L'invention a pour origine un problème de télécopieur à ruban d'impression enroulé sur un mandrin solidaire d'un pignon mené.

Pour des raisons particulières, la demanderesse a cherché à maîtriser le couple exercé sur le pignon mené plutôt que sa vitesse.

L'invention concerne ainsi un dispositif d'entraînement en rotation, autour d'un axe, par un pignon mené et un pignon menant, comportant une plaquette de friction d'entraînement intercalée entre les pignons menant et mené et des moyens de pression, pour presser axialement l'ensemble, caractérisé par le fait que les moyens de pression comprennent un pignon de pression coopérant avec le pignon menant par l'intermédiaire d'une plaquette de friction de pression et l'un au moins des pignons comporte une surface annulaire striée de coopération par friction avec la plaquette adjacente qui est une plaquette annulaire en feutre.

La surface de contact entre la plaquette et le pignon avec lequel elle coopère par frottement est ainsi augmentée et la transmission du couple d'entraînement est de ce fait mieux maîtrisée.

De préférence, la surface annulaire striée comporte des stries circulaires à section axiale en dent de scie.

Selon la force des moyens de pression, et dans la forme de réalisation préférée du dispositif de l'invention, cette force est adaptable, on adapte le frottement des pièces les unes sur les autres et donc le couple exercé par le pignon menant sur le pignon mené.

Dans une certaine forme de réalisation, la plaquette de friction d'entraînement est intercalée entre le pignon menant et un flasque radial d'un moyeu du pignon mené.

De préférence, la plaquette de friction d'entraînement est intercalée entre le pignon menant et un flasque radial d'une roue libre montée sur un moyeu du pignon mené.

Le pignon de pression peut comprendre un plateau de pression, un ressort de pression et une bague de verrouillage fixée axialement.

De préférence, les plaquettes de friction sont des plaquettes annulaires en feutre, elles sont fixées au pignon menant et elles coopèrent, du côté du pignon mené et du côté du pignon de pression, avec des surfaces annulaires striées, pour augmenter les surfaces de frottement et, par conséquent, la maîtrise du couple.

Dans ce cas, les surfaces de frottement des plaquettes de friction peuvent comporter des stries circulaires à section axiale en dent de scie.

L'invention sera mieux comprise à l'aide de la description suivante d'une forme de réalisation intéressante du dispositif d'entraînement, en référence au dessin annexé, sur lequel :

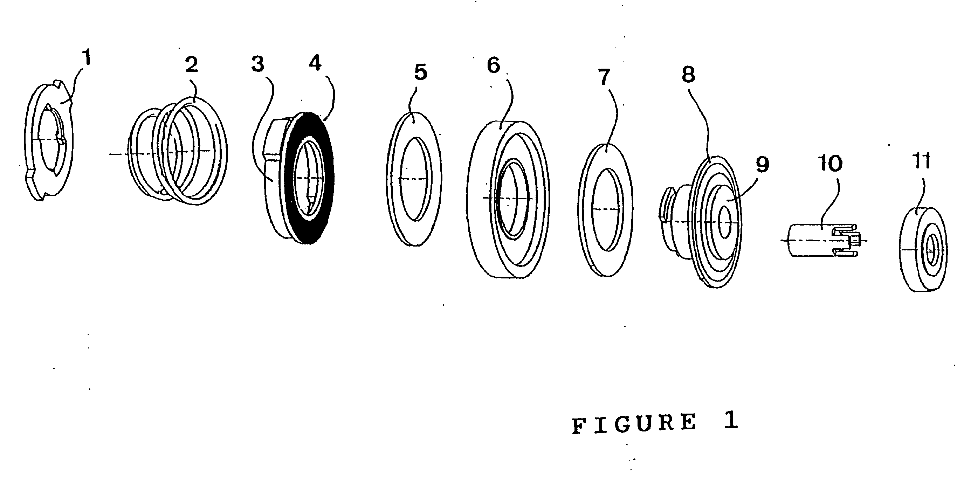

- la figure 1 est une vue en perspective éclatée du dispositif;

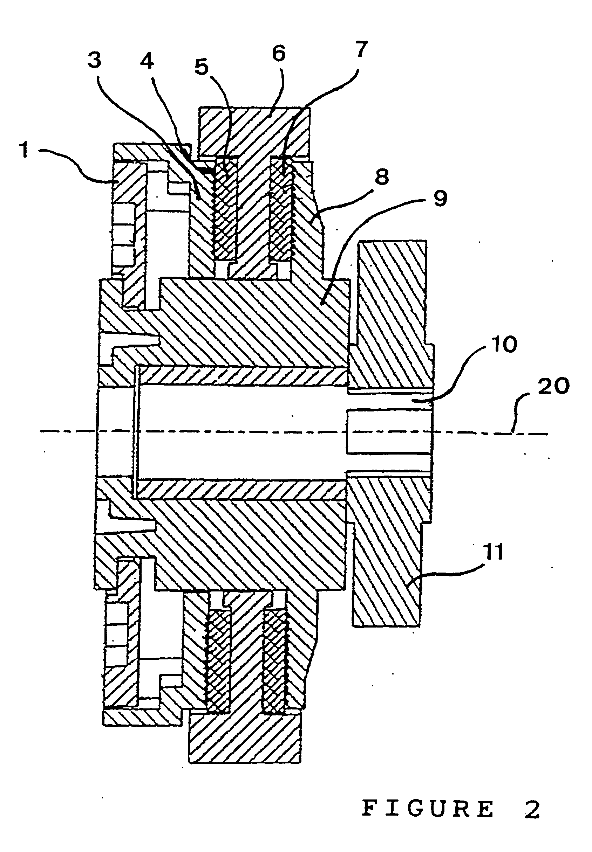

- la figure 2 est une vue en coupe axiale du dispositif de la figure 1, à-plus grande échelle, et
- la figure 3 est une vue en perspective, avec arraché, encore à plus grande échelle, du moyeu du pignon mené du dispositif de la figure 1.

Le dispositif d'entraînement en rotation représenté appartient à un télécopieur et sert à contrôler la rotation d'un mandrin, couplé à un pignon mené 11, portant, solidaire en rotation, un rouleau alimentaire de ruban encreur.

Le dispositif comprend un pignon menant 6, ou moteur, d'entraînement du pignon mené 11 autour d'un axe 20 commun à l'ensemble des pièces.

L'entraînement s'effectue par friction au moyen d'une plaquette de friction 7 intercalée entre les pignons menant 6 et mené 11. La plaquette 7 est ici une plaquette annulaire en feutre qui, dans cet exemple, est collée, par une face radiale, au flanc du pignon menant 6 et dont la face opposée est plaquée sur un flasque radial 8 d'un moyeu 9 du pignon mené 11. Plus précisément ici, le flasque 8 appartient à une roue libre, non représentée, montée sur le moyeu 9. Une pièce cylindre creuse 10 est emboîtée à force (ou clavetée) dans le moyeu 9 et comporte, à une extrémité libre, quatre doigts angulairement répartis coopérant avec quatre cavités correspondantes du pignon 11 pour le solidariser en rotation au moyeu 9, et pour le bloquer aussi en translation axiale.

La plaquette 7 est appliquée sur le flasque 8 sous une force axiale déterminée, si bien que le couple maximal, de frottement, entre pignons menant 6 et mené 11 est alors proportionnel à cette force et au coefficient de frottement du feutre 7 sur le matériau, ici plastique, formant le flasque 8.

La force axiale ci-dessus est exercée sur le plaquette 7 à travers le pignon menant 6, dont la face radiale opposée à celle de la plaquette 7 est au contact d'une autre plaquette de friction, référencée 5, ici identique à la plaquette 7, et donc aussi en feutre. La plaquette 5, elle aussi collée au pignon 6, est intercalée axialement entre celui-ci et un plateau annulaire de pression 4 d'un pignon de pression 3 coulissant axialement sur le moyeu 9 et bloqué ici en rotation sur celui-ci. Un ressort hélicoïdal de pression 2 est intercalé, sous compression axiale, entre une bague de verrouillage 1, bloquée axialement sur le moyeu 9, et une face radiale du pignon de pression 3 opposée au plateau 4. La bague 1, bloquée contre tout recul axial par un montage à baïonnette, peut comporter en outre un taraudage pour, une fois montée, être vissée sur le moyeu 9 afin d'ajuster ou adapter la force axiale du ressort 2, c'est-à-dire pour ajuster le couple maximal de frottement entre les pignons menant 6 et mené 11.

Le pignon menant 6 est ainsi emprisonné, sous une force axiale déterminée, dans les mâchoires, solidaires du pignon mené 11, constituées par le flasque fixe 8 et le plateau axialement mobile 3, 4.

La force axiale mise en jeu est ici limitée pour éviter de devoir renforcer les pièces et donc augmenter leurs poids et volume. L'extension radiale des surfaces de frottement est de même limitée.

Pour cela, on a tout d'abord choisi d'appliquer, au pignon menant 6, la force axiale du ressort 2 à travers un élément à coefficient de frottement élevé, ici du feutre. Ainsi, au lieu d'appliquer, comme cela aurait pu être prévu, la force axiale du ressort 2 au pignon menant 6 par un élément (5) glissant en rotation sans frottement sur ce dernier ou sur le plateau 4 avec un couple d'entraînement négligeable, on a au contraire choisi dans cet exemple du feutre, qui présente un coefficient de frottement important par rapport au matériau plastique du plateau 4, si bien que les deux faces radiales opposées du pignon 6, ici solidaires des plaquettes 5 et 7, frottent toutes les deux sur les mâchoires 4, 8 à travers les plaquettes 5 et 7 qui y sont adjacentes.

Comme, dans cet exemple, le pignon de pression 3, avec le plateau 4, est solidaire en rotation du moyeu 9, il exerce donc une double fonction, de mise en pression axiale des pignons 6 et 11 par le plateau 8, ainsi couplés par friction en rotation à travers la plaquette 7, et aussi d'entraînement en rotation du pignon 11, en complément du plateau 8 des mâchoires 4, 8.

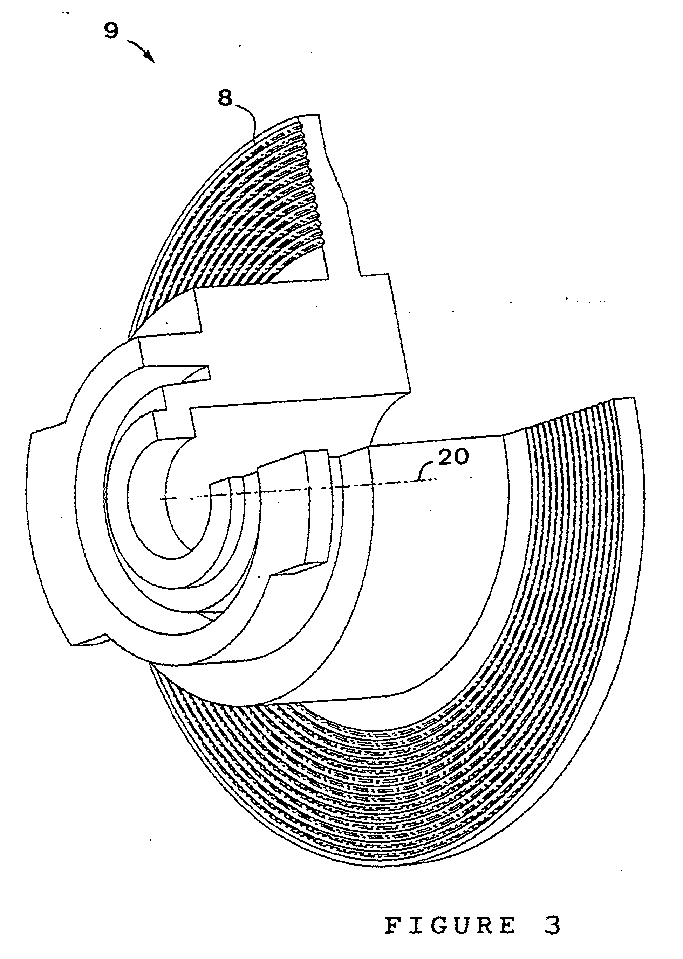

En outre, les surfaces radiales de frottement du plateau 4 et du flasque 8 (fig. 3) sont des surfaces annulaires striées, c'est-à-dire dont le profil reste inchangé dans tout plan de coupe passant par l'axe 20. Ici ce sont des stries circulaires centrées sur l'axe 20 et de section en dent de scie d'une profondeur d'environ 0,1 à 0,15 mm. Les surfaces des plaquettes 5 et 7 adjacentes prennent donc la même forme. Il a ainsi été constaté un accroissement du couple de frottement dépassant 30 % par rapport à une surface (4, 8) plane, sous une force axiale de pression, exercée par le ressort 2, restant inchangée. Le feutre, ou matériau similaire, présente une texture fibreuse qui s'adapte élastiquement à la forme des stries et ainsi maintient un contact constant avec la surface de celles-ci, c'est-à-dire présente un coefficient de frottement stable quasi constant.

On constate aussi, indépendamment de l'élasticité, un accroissement du coefficient de frottement feutre/plastique, semblant dû au fait que, vu en coupe axiale, l'inclinaison des deux flancs des stries, par rapport à une surface radiale (lisse), a un effet amplificateur de la force axiale de pression. En effet, il s'y ajoute alors deux composantes radiales égales et opposées sur les deux flancs respectifs de chaque strie, chaque composante radiale se composant vectoriellement, pour chaque flanc, avec la force de pression axiale que celui-ci subit. Ces forces radiales exercées par le feutre 5, 7 engendrent à l'équilibre, sur la surface de frottement associée 4, 8, des forces égales et opposées à ces forces génératrices, si bien que les surfaces en regard sont plaquées plus fortement l'une sur l'autre et donc présentent un couple limite de frottement accru. Dans le cas de stries en gorges étroites, donc à flancs peu inclinés sur l'axe 20 et n'opposant donc qu'une faible résistance à l'enfoncement axial du feutre, ce dernier est ainsi coincé dans ces gorges étroites et il suffit d'en empêcher le recul axial pour maintenir le couplage. On transforme ainsi la friction dans un plan radial, dans le cas de surfaces purement radiales, en une friction mettant en oeuvre une surface à reliefs, ayant donc aussi une extension axiale et étant donc de taille accrue. En d'autres termes, vu en coupe axiale, on replie radialement la surface radiale lisse (4, 8) pour lui donner une forme en accordéon, avec des plis à extension axiale, réduisant ainsi l'étendue radiale. On conçoit que, en variante, les disques de couplage d'entraînement en rotation 3 à 8 pourraient être remplacés par des éléments tronconiques emboîtés ou même cylindriques.

## Revendications

1. Dispositif d'entraînement en rotation, autour d'un axe, par un pignon mené (8, 11) et un pignon menant (6), comportant une plaquette de friction d'entraînement (7) intercalée entre les pignons menant (6) et mené (8, 11) et des moyens de pression (1, 2), pour presser axialement l'ensemble, les moyens de pression comprenant un pignon de pression (3, 4) coopérant avec le pignon menant (6) par l'intermédiaire d'une plaquette de friction de pression (5), lesdites plaquettes d'entraînement et de pression (5,7) étant des plaquettes annulaires en feutre, **caractérisé par le fait que** l'un au moins des pignons (6; 3, 4; 8, 11) comporte une surface annulaire striée (4, 8) de coopération par friction avec la plaquette adjacente (5, 7).

2. Dispositif selon la revendication 1, dans lequel la surface annulaire striée (4; 8) comporte des stries circulaires à section axiale en dent de scie.

3. Dispositif selon l'une des revendications 1 et 2, dans lequel les moyens de pression (1, 2) sont agencés pour que leur force de pression soit adaptable.

4. Dispositif selon l'une des revendications 1 à 3, dans lequel la plaquette de friction d'entraînement (7) est intercalée entre le pignon menant (6) et un flasque radial (8) d'un moyeu (9, 10) du pignon mené (11).

5. Dispositif selon l'une des revendications 1 à 3, dans lequel la plaquette de friction d'entraînement (7) est intercalée entre le pignon menant (6) et un flasque radial (8) d'une roue libre montée sur un moyeu (9, 10) du pignon mené (11).

6. Dispositif selon l'une des revendications 1 à 5, dans lequel le pignon de pression comprend un plateau de pression (4), un ressort de pression (2) et une bague de verrouillage (1) fixée axialement.

7. Dispositif selon l'une des revendications 1 à 6, dans lequel les plaquettes de friction en feutre (5, 7) sont fixées au pignon menant (6).

## Claims

1. Device for rotational drive, around a shaft, by a driven pinion (8, 11) and a driving pinion (6), comprising a friction drive plate (7) inserted between the driving (6) and driven (8, 11) pinions and pressure means (1, 2) to press the assembly axially, the pressure means including a pressure pinion (3, 4) working in conjunction with the driving pinion (6) through a pressure friction plate (5), the said drive and pressure plates (5, 7) being rings made from felt, **characterised in that** at least one of the pinions (6; 3, 4; 8, 11) has a striated annular surface (4, 8) working in conjunction by friction with the adjacent plate (5, 7).

2. Device according to Claim 1, whereby the striated annular surface (4; 8) has circular scores with saw-toothed axial section.

3. Device according to one of the Claims 1 and 2, whereby the pressure means (1, 2) are arranged so that their pressure force is adaptable.

4. Device according to one of the Claims 1 to 3, whereby the driving friction plate (7) is inserted between the drive pinion (6) and a radial flange (8) of a hub (9, 10) of the driven pinion (11).

5. Device according to one of the Claims 1 to 3, whereby the driving friction plate (7) is inserted between the drive pinion (6) and a radial flange (8) of a free wheel fitted to a hub (9, 10) of the driven pinion (11).

6. Device according to one of the Claims 1 to 5, whereby the pressure pinion includes a pressure plate (4), a pressure spring (2) and an axially fixed locking ring (1).

7. Device according to one of the Claims 1 to 6, whereby the felt friction plates (5, 7) are fixed to the driving pinion (6).

## Patentansprüche

1. Vorrichtung zum Drehantrieb um eine Achse mit Hilfe eines angetriebenen Rades (8, 11) und eines Antriebsrades (6), die eine zwischen dem Antriebsrad (6) und dem angetriebenen Rad (8, 11) angeordnete Antriebsreibscheibe (7) und Andruckmittel (1, 2) zum axialen Andrücken der Anordnung aufweist, wobei die Andruckmittel ein Andruckrad (3, 4) aufweisen, das mit dem Antriebsrad (6) unter Zwischenschaltung einer Andruckreibscheibe (5) zusammenwirkt, wobei die Antriebs- und Andruckreibscheiben (5, 7) ringförmige Filzscheiben sind, **dadurch gekennzeichnet, daß** wenigstens eines der Räder (6; 3, 4; 8, 11) eine gerillte ringförmige Oberfläche (4, 8) zum Reibschluß mit der benachbarten Scheibe aufweist.

2. Vorrichtung nach Anspruch 1, wobei die gerillte ringförmige Oberfläche (4; 8) ringförmige Rillen mit sägezahnförmigem axialen Querschnittsprofil aufweist.

3. Vorrichtung nach Anspruch 1 oder 2, wobei die Andruckmittel (1, 2) derart eingerichtet sind, daß ihre Andruckkraft einstellbar ist.

4. Vorrichtung nach einem der Ansprüche 1 bis 3, wobei die Antriebsreibscheibe (7) zwischen dem Antriebsrad (6) und einem radialen Flansch (8) einer Nabe (9, 10) des angetriebenen Rades (11) angeordnet ist.

5. Vorrichtung nach einem der Ansprüche 1 bis 3, wobei die Antriebsreibscheibe (7) zwischen dem Antriebsrad (6) und einem radialen Flansch (8) eines auf einer Nabe (9, 10) des angetriebenen Rades (11) montierten Freilaufs angeordnet ist.

6. Vorrichtung nach einem der Ansprüche 1 bis 5, wobei das Andruckrad eine Andruckscheibe (4), eine Druckfeder (2) und einen axial festgelegten Verriegelungsring (1) aufweist.

7. Vorrichtung nach einem der Ansprüche 1 bis 6, wobei die Filzreibscheiben (5, 7) am Antriebsrad (6) befestigt sind.
